# EUROPEAN PATENT SPECIFICATION

(11) **EP 0 465 786 B1**
(45) Date of publication and mention of the grant of the patent: **08.02.1995**
(21) Application number: 91107149.6
(22) Date of filing: 03.05.1991
(51) Int. Cl.: B60C 3/00, B60C 11/00

(54) **Dual tread tire**
Luftreifen mit doppelter Lauffläche
Pneumatique avec une bande de roulement double

(30) Priority: 09.07.1990 US 549831
(43) Date of publication of application: 15.01.1992
(73) Proprietor: Uniroyal Goodrich Licensing Services, Inc., Greenville, South Carolina 29605 (US)
(72) Inventor: Veith, Alan G., Akron, Ohio 44321 (US); Cardenas, Armando, Camarillo, California 93010 (US)
(74) Representative: Selting, Günther, Dipl.-Ing.

(56) References cited:
- DE-A- 2 103 665
- DE-A- 3 626 123
- DE-A- 3 916 711
- FR-A- 1 061 924
- GB-A- 2 193 933
- US-A- 3 830 273

## Description

### Technical Field

The present invention relates to a pneumatic tire. In particular, the present invention relates to a low aspect ratio tire, such as a performance tire, having improved wet traction characteristics during its entire service life.

### Description Of The Prior Art

A pneumatic radial tire having a relatively low aspect ratio and which is suitable for use on a high performance vehicle is known in the industry. Such a tire typically offers excellent dry traction characteristics which enable enhanced vehicle handling in good weather. However, because of the unique shape of the ground contacting surface area, such a tire has less than optimal wet traction, especially at high speeds. Furthermore, the wet traction characteristic of the tire becomes markedly reduced as the tire wears. The reduction in wet traction occurs because the volume of the grooves located in the tread of the tire decreases proportionately with wear of the tire.

One attempt at increasing the wet traction characteristics of a low aspect ratio tire is disclosed in U.S. Patent No. 3,830,273. U.S. Patent No. 3,830,273 discloses a tire according to the preamble of claim 1, formed with a pair of tread portions axially spaced relative to one another. Each of the tread portions is connected with a rim bead through a sidewall. A connecting portion is located between the tread portions. The connecting portion defines a relatively large annular void for water to enter. The connecting portion includes a wire rod forming a continuous annular structure with a diameter that is greater than the diameter of the rim beads and less than the diameter of the tread portions. The wire rod has a substantially circular cross-section which may tend to make the wire rod relatively inflexible as the tire rotates and the wire rod is forced into a flattened zone in a footprint. An adverse affect upon the life of the tire may result due to this inflexibility of the wire rod.

It is also well known that belted radial tires suffer from a condition referred to as "ply steer". Ply steer is a lateral force induced by rotation of the loaded tire. The direction of the lateral force is dependent upon the direction that the reinforcing members of the radially outermost reinforcing belt extend. It should, thus, be apparent that a tire without any ply steer is desirable.

### SUMMARY OF THE INVENTION

The present invention is directed to a tire having improved wet traction for its entire service life while avoiding the disadvantages associated with ply steer and relatively inflexible wire rods of known prior art tires.

This object is solved, according to the invention, with the features of claim 1.

The present invention is a pneumatic radial tire having a central axis about which the tire is rotatable. The tire includes a pair of axially spaced rim beads. A carcass extends between and is connected at opposite ends to the rim beads. The tire also includes a pair of axially spaced ground engaging tread portions. Each of the pair of tread portions includes a reinforcing member. The reinforcing member comprises an inner annular layer of parallel cords which are substantially linearly inextensible. The inner annular layer is located radially outwardly of the carcass and has cords disposed at a first acute angle relative to the mid-circumferential plane of the tire. The reinforcing member also includes an outer annular layer of parallel cords which are substantially linearly inextensible. The outer annular layer is located radially outwardly of the inner annular layer. The cords of the outer annular layer are disposed at a second acute angle relative to the mid-circumferential plane of the tire. The second acute angle is substantially equal to the first acute angle and extends in a direction opposite to the first acute angle. The cords in the outer annular layer in one of the pair of tread portions extends in an opposite direction to the cords in the outer annular layer in the other of said pair of tread portions to minimize ply steer. The inner and outer annular layers comprise a cut steel belt.

The tire also includes a central portion located intermediate of the pair of tread portions and includes surface means defining a circumferentially extending groove having a relatively large volume. The central portion also includes a central annular member having an outer diameter greater than the outer diameter of either of the rim beads and less than the inner diameter of either of the inner annular layers. The central annular member is located radially inward of the circumferentially extending groove in the central portion. The central annular member has physical properties that enable deflection as a function of the tread portions deflecting during rotation of the tire through a footprint.

The cross-sectional configuration of the central annular member is rectangular. The width of the central annular member extending in the axial direction of the tire is at least twice the height of the central annular member taken in a radial direction. This permits flexibility in the central annular member but retains hoop strength.

The central annular member comprises at least one annular array of steel cords extending in a direction substantially parallel to the mid-circumferential plane of the tire. The central annular member may also comprise a plurality annular arrayed steel cords layered radial one upon the other. Alternatively, the central annular member may comprise an annular fabric layer. Further, the annular fabric layer may be located centrally between a pair of axially spaced annular steel cords. A textile layer envelopes the central annular member.

Each of the pair of tread portions has a nominal tread thickness. The outer diameter of the central annular member is located a radial distance from the inner diameter of the inner annular layers between 0.5 to 3.0 times the nominal tread thickness. The tire may also include a nylon cap ply located radially outwardly of the respective one of the outer annular layer. The cap ply has a plurality of substantial inextensible cords extending in a direction parallel to the mid-circumferential plane of the tire to provide high speed durability.

### BRIEF DESCRIPTION OF THE DRAWINGS

Further features of the present invention will become apparent to those skilled in the art to which the present invention relates from reading the following specification with reference to the accompanying drawings, in which:
Fig. 1 is a cross-sectional view of a tire embodying the present invention mounted on a rim and in contact with a ground surface;
Fig. 2 is an enlarged cross-sectional view of a portion of the tire illustrated in Fig. 1;
Fig. 3 is a view of a portion of the tire in Fig. 2, taken approximately along line 3-3 in Fig. 2, illustrating the arrangement of plies of the tire;
Fig. 4 is an enlarged cross-sectional view of a central portion of the tire illustrated in Fig. 2; and
Figs. 5 and 6 are views similar to Fig. 4 illustrating alternate embodiments of the present invention.

### DESCRIPTION OF PREFERRED EMBODIMENTS

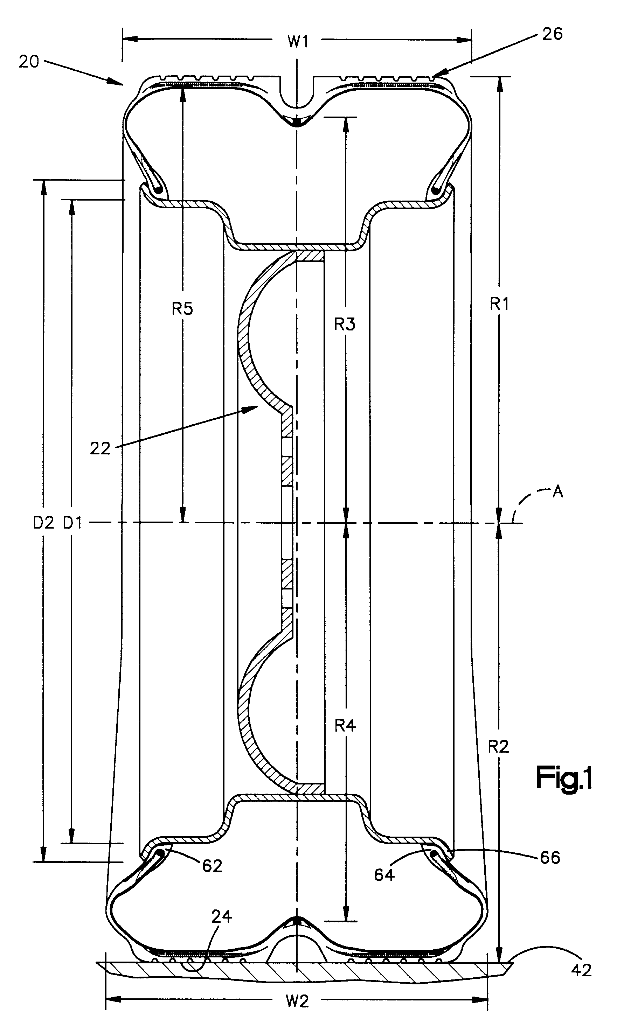

A tire 20 (Fig. 1) embodying the present invention is mounted on a rim 22 for attachment to a vehicle. The tire 20 and rim 22 are adapted to rotate about a longitudinal central axis A of the tire. The tire 20 is particularly suitable for use on a "high performance" automotive vehicle. The tire 20 embodying the present invention has minimal ply steer and provides improved wet traction during the service life of the tire. Advantages associated with a speed rated tire 20 having improved wet traction characteristics and minimal ply steer should be apparent.

During operation of the vehicle, the tire 20 and rim 22 rotate together so a portion 24 of the tread 26 of the tire remains in contact with a road surface 42. As the tire 20 rotates, a majority of the tread 26 has an outer radius R1 and width W1. The majority of the tread 26 is not in contact with the road surface 42.

As the tire 20 rotates, the portion 24 of the tread 26 in contact with the road surface 42 undergoes a deformation referred to as a "footprint". As the tire 20 rotates through a footprint, the portion 24 of the tread 26 in contact with the road surface 42 is deflected radially inwardly and has a radius R2. The radius R2 of the portion 26 is less than the radius R1 of the majority of the tread 26. Concurrently, the width W2 of the portion 24 of the tread 26 in contact with the road 42 becomes greater than the width W1 of the majority of the tread 26 not in contact with the road surface 42. Thus, rotation of the tire 20 causes constant deflection of the portion 24 of the tread 26 rotating through a footprint.

The tire 20 is made from a plurality of components, as described below. All the components of the tire 20 are assembled and then bonded together to form an integral unit during a curing operation.

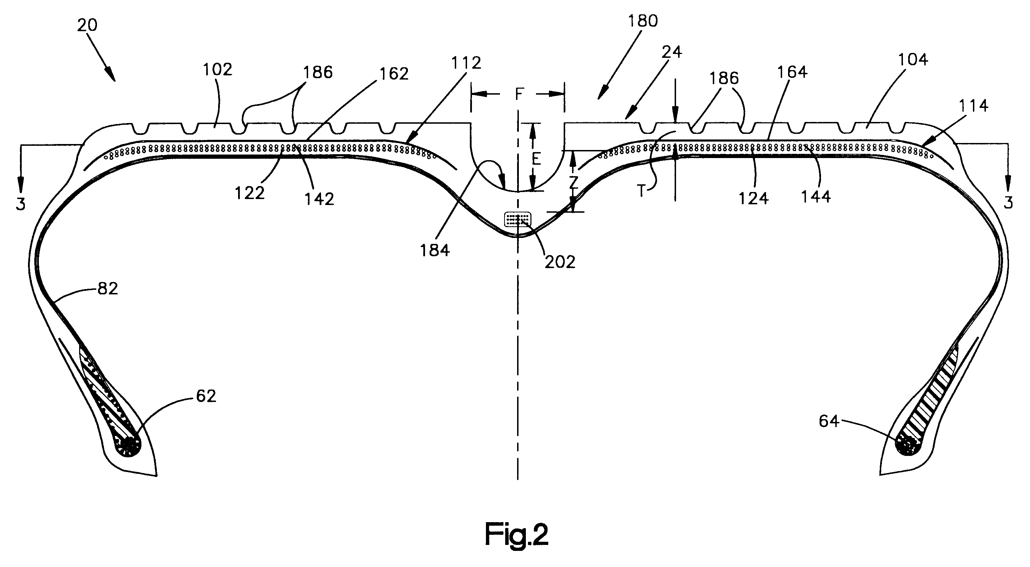

The time 20 (Fig. 2) includes a pair of axially spaced rim beads 62,64. Each of the rim beads 62,64 comprises an annular member made up of at least one wire reinforcing member. The rim beads 62,64 are preferably made of high strength steel. In the preferred embodiment of the invention illustrated in Fig. 2, a plurality of steel wires are wound circumferentially about one another to form each of the rim beads 62,64. Each of the rim beads 62,64 have an inner diameter D1 (Fig. 1) which is slightly smaller than the outer diameter D2 of the flanges 66 of the rim 22. The rim beads 62,64, thus, maintain the tire 20 mounted against the flanges 66 when the tire is properly inflated.

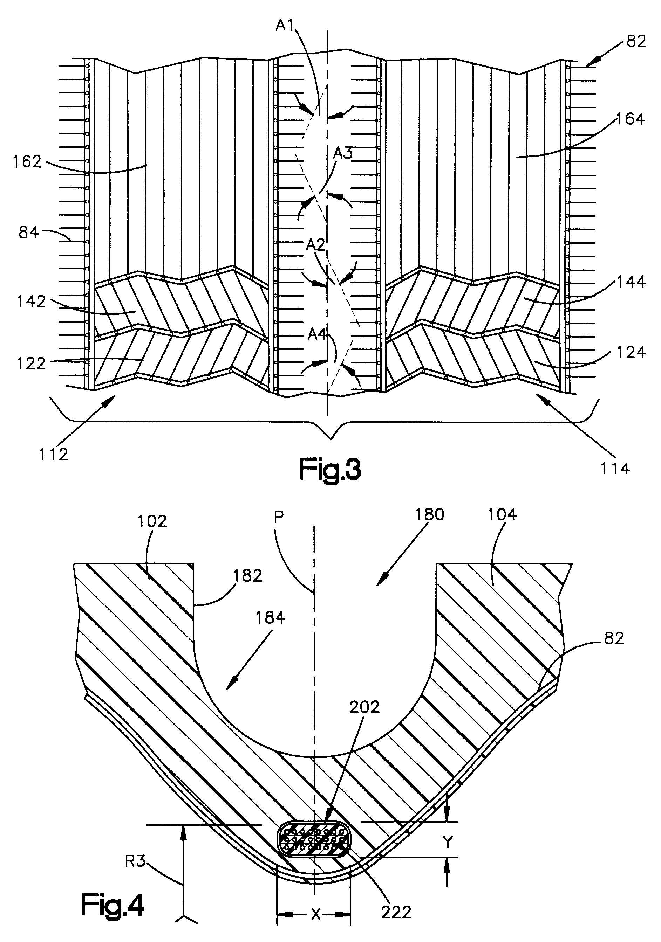

A carcass ply 82 (Figs. 2 and 3) extends between the rim beads 62,64. The carcass ply 32 is connected at its opposite ends to each of the rim beads 62,64, respectively. The carcass ply 82 is preferably a radial-type carcass in which the reinforcing cords 84 comprising the carcass extend in a direction approximately 75 to 90 degrees relative to the mid-circumferential plane P of the tire 20. The reinforcing cords 84 are located in a calendered elastomeric material. Although a single carcass ply 82 is illustrated, it will be apparent that multiple carcass plies can be used.

A pair of axially spaced ground engaging tread portions 102,104 (Fig. 2) are located about the outer circumference of the tire 20. Each of the tread portions 102,104 include a respective reinforcing member 112,114. Each reinforcing member 112,114 includes a respective inner annular layer or belt 122,124 (best seen in Fig. 3), a respective outer annular layer or belt 142,144, and a respective cap ply 162,164.

Each inner annular layer 122,124 is located radially outwardly of the carcass ply 82, as illustrated in Fig. 2. Each inner annular 122,124 layer includes substantially inextensible and parallel extending cords in a calendered elastomeric material. The cords of the inner annular layer 122 are disposed at a first acute angle A1 (Fig. 3) relative to the mid-circumferential plane P of the tire 20. The cords of the inner annular layer 124 are also disposed at an acute angle A2 relative to the mid-circumferential plane P of the tire 20. Angle A1 is substantially equal to angle A2 but extends in the opposite direction relative to the mid-circumferential plane P of the tire 20, as illustrated in Fig. 3. The cords of each inner annular layer 122,124 are preferably made of steel and form a cut belt.

An outer annular layer 142,144 is located radially outwardly of the inner annular layer 122,124, respectively. The outer annular layer 142,144 is a cut belt including substantially inextensible and parallel extending steel cords. The cords in the outer annular layer 142 are disposed at an angle A3 relative to the mid-circumferential plane P of the tire 20. The cords in the outer annular layer 144 are disposed at an angle A4 relative to the mid-circumferential plane P of the tire 20. The angle A3 is substantially equal to the angle A4 but extends in an opposite direction relative to the mid-circumferential plane of the tire 20. The angles A1, A2, A3 and A4 are preferably substantially equal in magnitude.

An important feature of the tire 20 of the present invention is that the cords in the outer annular layer 142 extend in an opposite direction and substantially equal angle to the cords in the outer annular layer 144, as illustrated in Fig. 3. By orienting the cords in the respective outer annular layers 142,144 in opposite and substantially equal angles A3,A4 relative to the mid-circumferential plane P, any ply steer effect generated by the outer annular layers is minimal. Minimal ply steer results because the combined ply steer induced by one outer annular layer is substantially offset by the ply steer induced by other outer annular layer.

In the preferred embodiment of the tire 20, the cap plies 162,164 include textile reinforcing cords, such as nylon. The textile reinforcing cords extend in a direction substantially parallel to the mid-circumferential plane P of the tire 20. The textile reinforcing cords in the cap plies 162,164 resist circumferential growth of the tire at relatively high operating speed in order to enable the tire 20 to attain an industry speed rating of at least "H".

The improved wet traction characteristic of the tire 20 embodying the present invention is provided by a central portion 180 (Figs. 2 and 4) located intermediate the ground engaging tread portions 102,104. The central portion 180 includes a surface 182 which defines a central annular void or groove 184. The central annular groove 184 extends continuously and circumferentially around the tire 20. The central annular groove 184 provides a relatively large volume for fluid, such as water, to enter and collect during rotation of the tire 20 through a footprint.

The radial depth E and axial width F of the central annular groove 184 is at least twice the respective depth G and width H of the grooves 186 in the tread portions 102,104. This relatively large volume of the central annular groove 184, thus, aids in preventing aquaplaning of the tire 20, and provides the improved wet traction characteristic. The grooves 186 may be connected with the central annular groove 182 by longitudinal grooves (not shown). The longitudinal grooves allow water to be channeled to the central annular groove and collect as the water is forced from between the tread portion 24 and the road surface 42.

The central annular groove 184 is provided with such a relatively large volume to enable the tire 20 to retain its wet traction characteristic as the tire wears. Wet traction loss often occurs when the rubber in the tread of a grooved tire wears during the life of a tire a sufficient amount so that the grooves do not provide a sufficient volume for relatively large amounts of fluid to enter. For example, the central annular groove 184 is sized such that when the tire 20 wears so twenty-eight percent (28%) of the radial depth G of the grooves 186 remains, the tire retains sixty-five percent (65%) of its wet traction characteristic in the form of fluid accepting volume. A tire not having such a central annular groove 184 at the same tread wear would retain approximately only twenty percent (20%) of its wet traction characteristic in the form of groove volume.

Locating such a large central annular groove 184 along the mid-circumferential plane P of the tire 20 requires a structural modification of the tire. Just molding a relatively large central annular groove 184 in the tire 20 is not feasible. For example, it will be noted that the depth of the central annular groove 184 extends radially inward of the carcass ply 82 in the tread portions 102,104 of the tire. Thus, a reinforcing central annular member 202 (Figs. 2 and 4) is required and is provided according to the present invention.

The central annular member 202 is located along the mid-circumferential plane P of the tire 20. The central annular member 202 prevents the carcass ply 82 from expanding radially outwardly and decreasing the depth and, thus, the volume of the central annular groove 184. The central annular member 202 also aids the lateral stability of the tire 20. The central annular member 202 has a substantially annular configuration when the tire 20 is not loaded. The central annular member 202 is also located radially inwardly of the bottom of the central annular groove 182 and radially outwardly of the carcass ply 82.

The central annular member 202 has an outer radius R3 (Fig. 1) when a portion of the tire 20 is unloaded as defined by not deflecting through a footprint. The outer radius R3 is greater than one half of the outer diameter of either of the rim beads 62,64. The outer radius R3 is also less than the radius R5 to the inside of either of the annular inner layers 122,124. The central annular member 202 has an outer radius R4 when the portion 24 of the tread 26 is loaded as defined by deflecting through a footprint.

The central annular member 202 has physical properties that enable it to deflect from the annular configuration as a function of the tire 20 deflecting as the portion 24 of the tire rotates through a footprint. That is, the central annular member 202 is somewhat flexible in the radial inward direction while having sufficient hoop strength to resist circumferential expansion due centrifugal forces during operation. If the central annular member 202 was not designed to flex radially inwardly during a footprint, the central annular member could damage the tire and possibly cause the tire to fail.

The central annular member 202 (Fig. 4) has a substantially rectangular cross-section taken in a plane extending radially of the central axis A. Preferably, the central annular member 202 is relatively flat to provide the desired radial flexibility and sufficient hoop strength. Specifically, the width X of the rectangular cross-section of the central annular member, taken in a direction parallel to the central axis A, is at least twice the height Y of the rectangular cross-section, taken radially of the central axis A.

Each of the pair of tread portions 102,104 has a nominal tread thickness T (Fig. 2) defined as the radial distance between a ground engaging surface of the tread and the outer annular layer 142,144 of that tread portion. The radially outermost portion of the central annular member 202 is located a radial distance Z from the innermost portion of the inner annular layer 122,124 in the range of 0.5 to 3.0 times the nominal tread thickness T of the tread portions 102,104. This location of the central annular member 202 assures that the central annular groove 184 has sufficient depth G and volume to provide improved the wet traction characteristics of the tire 20. This location of the central annular member 202 also assures that the carcass ply 82 is not too flexible in the area of the central annular portion 180 to create a tire that would be laterally unstable.

According to the preferred embodiment of the tire 20 of the present invention, the central annular member 202 (Fig. 4) comprises an annular array of steel cords 222 extending in a direction substantially parallel to the mid-circumferential P plane of the tire 20, illustrated in Fig. 4. The steel cords 222 are preferably arranged in a 3x8 or 4x8 configuration. For example, there are three spirally wrapped layers of eight steel cords extending parallel to the longitudinal central axis of the tire. Each layer of the central annular member 202 is formed from a rubberized tape that is wound circumferentially about itself three times. The steel cords 222 are formed from a material similar to that in the rim beads 62,64. The steel cords 222 have physical properties which allow flexibility of the central annular member 202 as the tire 20 goes through a footprint during rotation of the tire against the ground surface 42.

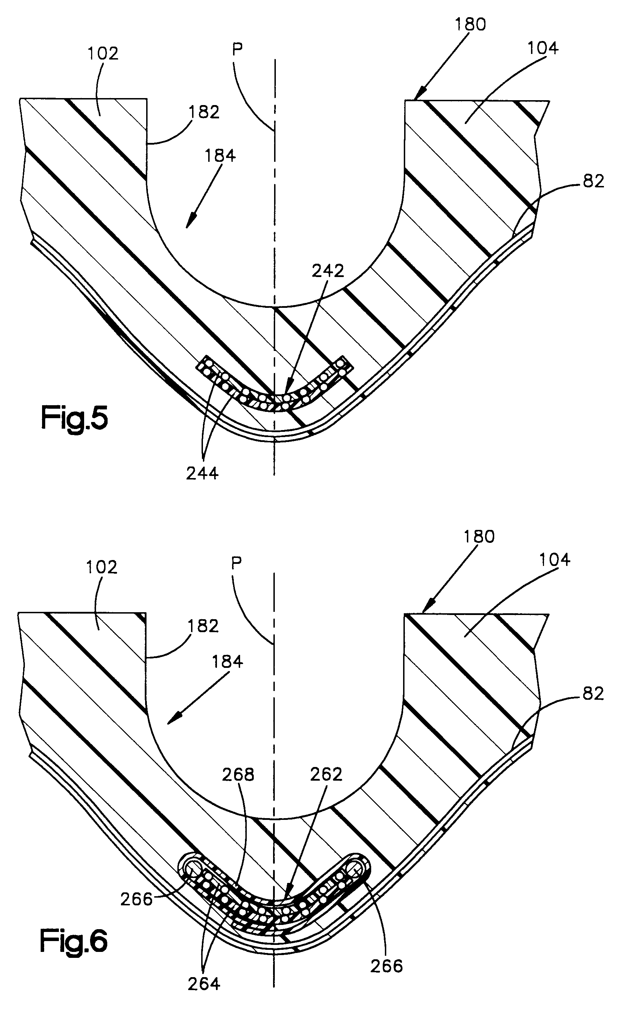

As illustrated in Fig. 5, an alternate embodiment of the present invention includes a central annular member 242 comprising a pair of annular fabric layers 244. While any number of layers 244 of fabric may be used, only two are shown in Fig. 5. The fabric layer 244 is preferably made from a reinforced textile material, such as aramid cords in calendered rubber. The central annular member 242 closely conforms to the shape of the bottom of central annular groove 182.

In Fig. 6, yet another alternate embodiment of the present invention, is illustrated. The central annular member 262 is similar to the structure 242 in Fig. 5 in that a fabric layer 264 is provided which is identical to the fabric layer 244 in Fig. 5. Additionally, two axially spaced steel cords 266 are provided at either axial end of the fabric layer 264. The fabric layer 264 and steel cords 266 may be rubberized and spirally wrapped with a nylon ply 268. The nylon ply 268 is primarily for assuring that during a tire building operation, the components comprising the central annular member 202, 242 or 262 do not move relative to one another. Thus a light weight, flexible and strong central annular member is provided.

From the above description of preferred embodiments of the invention, those skilled in the art will perceive improvements, changes and modifications. Such improvements, changes and modifications within the skill of the art are covered by the appended claims.

## Claims

1. A tire having a longitudinal central axis (A) about which the tire is rotatable, said tire comprising:
a pair of axially spaced rim beads (62,64),
a carcass ply (82) extending between and connected at opposite ends to said rim beads,
a pair of axially spaced ground engaging annular tread portions (102,104), each of said pair of tread portions including a reinforcing member (112,114) comprising:
an inner annular layer (122,124) of substantially inextensible and parallel extending cords, and
an outer annular layer (142,144) of substantially inextensible and parallel extending cords, said outer annular layer located radially outwardly of said inner annular layer (122,124),
a central portion (180) intermediate said pair of tread portions (102,104) and including surface means defining a circumferentially extending groove (184), and
a central annular member (202) having an outer diameter greater than the outer diameter of either of said rim beads (62,64) and less than the inner diameter of either of said inner annular layers (122,124), said central annular member located radially inward of said groove (184) in said central portion (180) and being deflectable as a function of said tread portions (102,104) deflecting,
**characterized in that**
the cords of one inner annular layer (122) are disposed at a first acute angle (A1) relative to the mid-circumferential plane (P) of the tire (20) and the cords of the other inner annular layer (124) are disposed at a second acute angle (A2) relative to the mid-circumferential plane (P) of the tire (20), said first and second acute angles (A1,A2) being substantially equal but extending in opposite directions relative to the mid-circumferential plane (P) of the tire (20), and
the cords of one outer annular layer (142) are disposed at a third acute angle (A3) relative to the mid-circumferential plane (P) of the tire (20) and the cords of the other outer annular layer (144) are disposed at a fourth acute angle (A4) relative to the mid-circumferential plane (P) of the tire (20), said third and fourth acute angles (A3,A4) being substantially equal but extending in opposite directions relative to the mid-circumferential plane (P) of the tire (20), and
the first, second, third and fourth acute angles (A1,A2,A3,A4) being substantially equal in magnitude.

2. The tire set forth in claim 1 wherein said central annular member (202) has a substanstially rectangular cross-section taken in a plane extending radially of the central axis (P) of the tire (20).

3. The tire set forth in claim 2 wherein the width of the rectangular cross-section of said central annular member (202) taken in a direction extending parallel to the central axis (P) is at least twice the height of the rectangular cross-section taken in a direction extending radially of the central axis.

4. The tire set forth in claim 1 wherein each of said pair of tread portions (102,104) has a nominal tread thickness (T) defined as the radial distance between a ground engaging surface of one of said pair of tread portions and said outer annular layer (142,144) of said one tread portion, the radially outermost portion of said central annular member (202) located a radial distance (Z) from said inner diameter of said inner annular layer (122,124) between 0.5 to 3.0 times the nominal tread thickness.

5. The tire set forth in claim 1 further including a pair of cap plies, each of said pair of cap plies (162,164) located radially outwardly of a respective one of said outer annular layers (142,144), each of said pair of cap plies comprising a plurality of substantially inextensible cords extending in a direction substantially parallel to the mid-circumferential plane (P) of the tire.

6. The tire set forth in claim 1 wherein each of said inner and outer annular layers comprises a cut belt having steel cords.

7. The tire set forth in claim 1 further including surface means defining at least one circumferentially extending groove (186) in one of said pair of tread portions (102,104), said groove (184) in said central portion (180) and said groove (186) in said one of said pair of tread portions having respective widths and depths taken in a plane extending radially of the central axis (A), said width and depth of said groove (184) in said central portion being at least twice the respective width and depth of said groove (186) in said one of said pair or tread portions (102,104).

8. The tire set forth in claim 1 wherein said central annular member (180) comprises at least one annular array of steel cords (222) extending in a direction substantially parallel to the mid-circumferential plane (P) of the tire (20).

9. The tire set forth in claim 8 wherein said central annular member (180) comprises a tape (244) containing at least eight parallel extending steel cords spirally wrapped about itself at least three times.

10. The tire set forth in claim 1 wherein said central annular member (180) comprises an annular fabric layer (264).

11. The tire set forth in claim 10 further including a pair of axially spaced annular steel cords (266) located on either side of said central annular member (180).

12. The tire set forth in claim 1 further including textile layer (268) wrapped about said central annular member (180).

13. The tire set forth in claim 1 wherein said central portion (180) is located along the mid-circumferential plane (P) of the tire.

## Patentansprüche

1. Reifen mit einer Längsmittelachse (A), um die der Reifen drehbar ist, wobei der Reifen aufweist:
zwei axial voneinander beabstandete Felgenwülste (62,64),
eine sich zwischen den Felgenwülsten erstreckende und an entgegengesetzten Enden mit diesen verbundene Karkassenlage (82),
zwei axial voneinander beabstandete, am Boden angreifende ringförmige Laufflächenbereiche (103,104), wobei die beiden Laufflächenbereiche jeweils ein Verstärkungsteil (112,114) aufweisen, welches aufweist:
eine innere ringförmige Schicht (122,124) aus im wesentlichen nichtausdehnbaren und parallel verlaufenden Cords, und
eine äußere ringförmige Schicht (142,144) aus im wesentlichen nichtausdehnbaren und parallel verlaufenden Cords, wobei die äußere ringförmige Schicht in bezug auf die innere ringförmige Schicht (122,124) radial außen angeordnet ist,
einen zentralen Bereich (180), der zwischen den zwei Laufflächenbereichen (103,104) angeordnet ist und eine Oberflächeneinrichtung aufweist, die eine umfangsmäßig verlaufende Rille (184) bildet, und
ein zentrales ringförmiges Teil (202) mit einem Außendurchmesser, der größer als der Außendurchmesser von jedem der Felgenwülste (62,64) und kleiner als der Innendurchmesser von jeder der inneren ringförmigen Schichten (122,124) ist, wobei das zentrale ringförmige Teil in bezug auf die Rille (184) in dem zentralen Bereich (180) radial innen angeordnet und infolge der sich biegenden Laufflächenbereiche (102,104) biegbar ist,
**dadurch gekennzeichnet, daß**
die Cords einer inneren ringförmigen Schicht (122) relativ zu der Umfangsmittelebene (P) des Reifens (20) unter einem ersten spitzen Winkel (A1) angeordnet sind und die Cords der anderen inneren ringförmigen Schicht (124) relativ zu der Umfangsmittelebene (P) des Reifens (20) unter einem zweiten spitzen Winkel (A2) angeordnet sind, wobei die ersten und zweiten spitzen Winkel (A1,A2) im wesentlichen gleich sind, aber relativ zu der Umfangsmittelebene (P) des Reifens (20) in entgegengesetzten Richtungen verlaufen, und
die Cords einer äußeren ringförmigen Schicht (142) relativ zu der Umfangsmittelebene (P) des Reifens (20) unter einem dritten spitzen Winkel (A3) angeordnet sind und die Cords der anderen äußeren ringförmigen Schicht (144) relativ zu der Umfangsmittelebene (P) des Reifens (20) unter einem vierten spitzen Winkel (A4) angeordnet sind, wobei die dritten und vierten spitzen Winkel (A3,A4) im wesentlichen gleich sind, aber relativ zu der Umfangsmittelebene (P) des Reifens (20) in entgegengesetzten Richtungen verlaufen, und
die ersten, zweiten, dritten und vierten spitzen Winkel (A1,A2,A3,A4) im wesentlichen von gleicher Größe sind.

2. Reifen nach Anspruch 1, bei dem das zentrale ringförmige Teil (202) in einer radial zur Mittelachse (A) des Reifens (20) verlaufenden Ebene einem im wesentlichen rechtwinkligen Querschnitt aufweist.

3. Reifen nach Anspruch 3, bei dem die Breite des rechtwinkligen Querschnittes des zentralen ringförmigen Teils (202) in einer parallel zur Mittelachse (A) verlaufenden Richtung mindestens die doppelte Höhe des rechtwinkligen Querschnitts in einer radial zur Mittelachse verlaufenden Richtung aufweist.

4. Reifen nach Anspruch 1, bei dem jeder der beiden Laufflächenbereiche (102,104) eine Laufflächennenndicke (T) aufweist, die als der Radialabstand zwischen einer am Boden angreifenden Fläche von einem der beiden Laufflächenbereiche und der äußeren ringförmigen Fläche (142,144) des anderen Laufflächenbereiches definiert ist, wobei der radial äußerste Bereich des zentralen ringförmigen Teils (102) mit einem radialen Abstand (Z) von dem Innendurchmesser der inneren ringförmigen Schicht (122,124) angeordnet ist, der zwischen dem 0,5-fachen bis 3-fachen der Laufflächennenndicke liegt.

5. Reifen nach Anspruch 1, ferner mit zwei Decklagen, wobei jede der beiden Decklagen (162,164) in bezug auf eine betreffende der äußeren ringförmigen Schichten (142,144) radial außen angeordnet ist, wobei jede der beiden Decklagen mehrere im wesentlichen nichtausdehnbare Cords aufweist, die sich in einer im wesentlichen parallel zu der Umfangsmittelebene (P) des Reifens verlaufenden Ebene erstrecken.

6. Reifen nach Anspruch 1, bei dem jede der inneren und äußeren ringförmigen Schichten einen geschnittenen Gürtel mit Stahlcords aufweist.

7. Reifen nach Anspruch 1, ferner mit einer Oberflächeneinrichtung, die mindestens eine umfangsmäßig verlaufende Rille (186) in einem der beiden Laufflächenbereiche (102,104) bildet, wobei die Rille (184) in dem zentralen Teil (180) und die Rille (186) in dem einen der beiden Laufflächenbereiche in einer radial zur Mittelachse (A) verlaufenden Ebene jeweilige Breiten und Tiefen aufweisen, wobei die Breite und Tiefe der Rille (184) in dem zentralen Teil mindestens das Zweifache der betreffenden Breite und Tiefe der Rille (186) in dem einen der beiden Laufflächenbereiche (102,104) beträgt.

8. Reifen nach Anspruch 1, bei dem das zentrale ringförmige Teil (180) mindestens eine ringförmige Anordnung aus Stahlcords (222) aufweist, die sich in einer im wesentlichen parallel zu der Umfangsmittelebene (P) des Reifens (20) verlaufenden Richtung erstrecken.

9. Reifen nach Anspruch 8, bei dem das zentrale ringförmige Teil (180) ein Band (244) aufweist, das mindestens acht parallele Stahlcords aufweist, die mindestens dreimal spiralförmig um sich selbst gewickelt sind.

10. Reifen anch Anspruch 1, bei dem das zentrale ringförmige Teil (180) eine ringförmige Gewebeschicht (264) aufweist.

11. Reifen nach Anspruch 10, ferner mit zwei axial voneinander beabstandeten ringförmigen Stahlcords (266), die auf jeder Seite des zentralen ringförmigen Teils (180) angeordnet sind.

12. Reifen nach Anspruch 1, ferner mit einer um das zentrale ringförmige Teil (180) gewickelten Textilschicht (268).

13. Reifen nach Anspruch 1, bei dem der zentrale Bereich (180) entlang der Umfangsmittelebene (P) des Reifens angeordnet ist.

## Revendications

1. Bandage ayant un axe central longitudinal (A) autour duquel le bandage peut tourner, ledit bandage comprenant :
une paire de bourrelets de jante espacés axialement (62, 64),
une nappe de carcasse (82) s'étendant entre et reliée aux extrémités opposées desdits bourrelets de jante,
une paire de parties annulaires de bande de roulement (102, 104) en contact avec le sol et espacées axialement, chacune de ladite paire de parties de bande de roulement comprenant un élément de renfort (112, 114) comprenant :
une couche annulaire interne (122, 124) de câbles s'étendant parallèlement et sensiblement inextensibles, et
une couche annulaire externe (142, 144) de câbles s'étendant parallèlement et sensiblement inextensibles, ladite couche annulaire externe étant disposée radialement vers l'extérieur de ladite couche annulaire interne (122, 124),
une partie centrale (180) entre ladite paire de parties de bande de roulement (102, 104) et comprenant un moyen de surface définissant une rainure s'étendant circonférentiellement (184), et
un élément annulaire central (202) ayant un diamètre supérieur au diamètre externe de l'un desdits bourrelets de jante (62, 64) et inférieur au diamètre interne de l'une desdites couches annulaires internes (122, 124), ledit élément annulaire central étant disposé radialement vers l'intérieur de ladite rainure (184) dans ladite partie centrale (180) et étant déformable en fonction de la déformation desdites parties de bande de roulement (102, 104),
caractérisé en ce que
les câbles d'une couche annulaire interne (122) sont disposés suivant un premier angle aigu (A1) par rapport au plan circonférentiel médian (P) du bandage (20) et les câbles de l'autre couche annulaire interne (124) sont disposés suivant un second angle aigu (A2) par rapport au plan circonférentiel médian (P) du bandage (20), lesdits premier et second angles aigus (A1, A2) étant sensiblement égaux mais s'étendant dans des directions opposées par rapport au plan circonférentiel médian (P) du bandage (20), et
les câbles d'une couche annulaire externe (142) sont disposés suivant un troisième angle aigu (A3) par rapport au plan circonférentiel médian (P) du bandage (20) et les câbles de l'autre couche annulaire externe (144) sont disposés suivant un quatrième angle aigu (A4) par rapport au plan circonférentiel médian (P) du bandage (20), lesdits troisième et quatrième angles aigus (A3, A4) étant sensiblement égaux mais s'étendant dans des directions opposées par rapport au plan circonférentiel médian (P) du bandage (20), et
les premier, second, troisième et quatrième angles aigus (A1, A2, A3, A4) étant sensiblement égaux en amplitude.

2. Bandage selon la revendication 1, dans lequel ledit élément annulaire central (202) a une section transversale sensiblement rectangulaire prise dans un plan s'étendant radialement depuis l'axe central (A) du bandage (20).

3. Bandage selon la revendication 2, dans lequel la largeur de la section transversale rectangulaire dudit élément central annulaire (202) prise dans une direction s'étendant parallèlement à l'axe central (A) est au moins le double de la hauteur de la section transversale rectangulaire prise dans une direction s'étendant radialement depuis l'axe central.

4. Bandage selon la revendication 1, dans lequel chacune de ladite paire de parties de bande de roulement (102, 104) a une épaisseur nominale de bande de roulement (T) définie comme la distance radiale entre une surface en contact avec le sol de l'une de ladite paire de parties de bande de roulement et ladite couche annulaire externe (142, 144) de ladite une partie de bande de roulement, la partie radialement la plus externe dudit élément annulaire central (202) étant disposée à une distance radiale (Z) dudit diamètre interne de ladite couche annulaire interne (122, 124) comprise entre 0,5 et 3,0 fois l'épaisseur nominale de bande de roulement.

5. Bandage selon la revendication 1, comprenant en outre une paire de nappes de croissant, chacune de ladite paire de nappes de croissant (162, 164) étant disposée radialement vers l'extérieur de l'une respective desdites couches annulaires externes (142, 144), chacune de ladite paire de nappes de croissant comprenant une pluralité de câbles sensiblement inextensibles s'étendant dans une direction sensiblement parallèle au plan circonférentiel médian (P) du bandage.

6. Bandage selon la revendication 1, dans lequel chacune desdites couches annulaires interne et externe comprend une ceinture coupée ayant des câbles en acier.

7. Bandage selon la revendication 1, comprenant en outre un moyen de surface définissant au moins une rainure s'étendant circonférentiellement (186) dans l'une de ladite paire de parties de bande de roulement (102, 104), ladite rainure (184) dans ladite partie centrale (180) et ladite rainure (186) dans l'une précitée de ladite paire de parties de bande de roulement ayant des largeurs et des profondeurs respectives prises dans un plan s'étendant radialement depuis l'axe central (A), lesdites largeur et profondeur de ladite rainure (184) dans ladite partie centrale étant au moins le double de la largeur et de la profondeur respectives de ladite rainure (186) de l'une précitée de ladite paire de parties de bande de roulement (102, 104).

8. Bandage selon la revendication 1, dans lequel ledit élément annulaire central (180) comprend au moins un réseau annulaire de câbles en acier (222) s'étendant dans une direction sensiblement parallèle au plan circonférentiel médian (P) du bandage (20).

9. Bandage selon la revendication 8, dans lequel ledit élément annulaire central (180) comprend une bande (244) contenant au moins huit câbles en acier s'étendant parallèlement, enveloppée en spirale autour d'elle-même au moins trois fois.

10. Bandage selon la revendication 1, dans lequel ledit élément annulaire central (180) comprend une couche annulaire en tissu (264).

11. Bandage selon la revendication 10, comprenant en outre une paire de câbles annulaires en acier espacés axialement (266) disposés sur un côté quelconque dudit élément annulaire central (180).

12. Bandage selon la revendication 1, comprenant en outre une couche textile (268) enveloppée autour dudit élément annulaire central (180).

13. Bandage selon la revendication 1, dans lequel ladite partie centrale (180) est disposée le long du plan circonférentiel médian (P) du bandage.
